# EUROPÄISCHE PATENTSCHRIFT

(11) **EP 4 392 198 B1**
(45) Veröffentlichungstag und Bekanntmachung des Hinweises auf die Patenterteilung: **04.12.2024**
(21) Anmeldenummer: 21840840.9
(22) Anmeldetag: 16.12.2021
(51) Int. Cl.: B23K 20/10

(54) **ULTRASCHALLSCHWEISSVORRICHTUNG MIT EINEM SONOTRODENTRÄGER UND EINER DARAN BEFESTIGTEN SONOTRODE**
ULTRASONIC WELDING DEVICE WITH A SONOTRODE CARRIER AND A SONOTRODE ATTACHED TO IT
DISPOSITIF DE SOUDAGE PAR ULTRASONS AVEC UN SUPPORT DE SONOTRODE ET UNE SONOTRODE FIXEE A CELUI-CI

(43) Veröffentlichungstag der Anmeldung: 03.07.2024
(73) Patentinhaber: Schunk Sonosystems GmbH, 35435 Wettenberg (DE)
(72) Erfinder: MÜLLER, Stefan, 35580 Wetzlar (DE); MUELA, Valentin, 35606 Solms (DE)
(74) Vertreter: Qip Patentanwälte Dr. Kuehn & Partner mbB
(86) Internationale Anmeldenummer: PCT/EP2021/086319
(87) Internationale Veröffentlichungsnummer: WO 2023/110109

(56) Entgegenhaltungen:
- DE-B3- 10 330 431
- US-A1- 2021 154 948

## Beschreibung

### Gebiet der Erfindung

Die vorliegende Erfindung betrifft eine Ultraschallschweißvorrichtung. Darüber hinaus betrifft die Erfindung ein Verfahren zum Herstellen einer Sonotrode für eine solche Ultraschallschweißvorrichtung und ein Verfahren zum Herstellen eines Sonotrodenträgers für eine solche Ultraschallschweißvorrichtung.

### Hintergrund der Erfindung

Ultraschallschweißvorrichtungen umfassen in der Regel einen Sonotrodenträger, an dem eine Sonotrode austauschbar befestigt werden kann. Mittels des Sonotrodenträgers kann die Sonotrode in Ultraschallschwingungen versetzt werden, deren Energie dann über die Sonotrode auf ein zu schweißendes Werkstück übertragen werden kann. Je nach Anwendung kann der Sonotrodenträger mit unterschiedlichen Typen von Sonotroden kombiniert werden, wie beispielsweise Sonotroden zum Punkt- oder Rollnahtschweißen oder Sonotroden in Form eines Biegeschwingers, der auch an schwer zugänglichen Stellen eingesetzt werden kann (um nur einige Beispiele zu nennen).

Die Sonotrode kann beispielsweise über eine oder mehrere Schrauben mit dem Sonotrodenträger verschraubt sein. Abweichende Anzugsmomente der Schraube(n), etwa aufgrund der Verwendung falscher Werkzeuge oder aufgrund verschmutzter oder fehlerhafter Koppelflächen, können das Schwingungsverhalten der Sonotrode, und damit das Schweißverhalten der Ultraschallschweißvorrichtung, maßgeblich beeinflussen. Eine unzureichende Klemmkraft kann beispielsweise dazu führen, dass sich die Sonotrode im Schweißbetrieb verdreht und/oder im Bereich der Koppelflächen übermäßig verformt, was sich negativ auf das Schweißergebnis auswirken kann. Schlimmstenfalls kann es zu Brüchen der Sonotrode und/oder der Schraube(n) kommen.

DE 103 30 431 B3 beschreibt eine Ultraschallschweißvorrichtung mit mehreren kraftschlüssig verbundenen über Kopplungsflächen aneinander angrenzenden Elementen.

US 2021/0154948 A1 beschreibt eine Ultraschallschweißvorrichtung mit einem austauschbaren Amboss.

### Zusammenfassung der Erfindung und vorteilhafter Ausführungsformen

Es kann daher Bedarf an einer Ultraschallschweißvorrichtung bestehen, die eine verbesserte Befestigung einer Sonotrode an einem Sonotrodenträger ermöglicht.

Des Weiteren kann Bedarf an einem Verfahren zur Herstellung einer entsprechend verbesserten Sonotrode bestehen.

Nicht zuletzt kann Bedarf an einem Verfahren zur Herstellung eines entsprechend verbesserten Sonotrodenträgers bestehen.

Diesen Bedürfnissen kann mit den Gegenständen der unabhängigen Ansprüche entsprochen werden. Vorteilhafte Ausführungsformen sind in den abhängigen Ansprüchen, der nachfolgenden Beschreibung und den beigefügten Figuren dargelegt.

Ein erster Aspekt der Erfindung betrifft eine Ultraschallschweißvorrichtung gemäß Anspruch 1. Die Ultraschallschweißvorrichtung umfasst zumindest eine Sonotrode und einen Sonotrodenträger, der ausgebildet ist, um die Sonotrode in Ultraschallschwingungen zu versetzen. Die Sonotrode und der Sonotrodenträger weisen jeweils eine Berührungsfläche auf, vorstehend auch Koppelfläche genannt. Mindestens eine der Berührungsflächen ist zumindest abschnittsweise aufgeraut. Die Sonotrode ist derart austauschbar am Sonotrodenträger befestigt, dass die Berührungsflächen gegeneinandergedrückt werden.

Ein zweiter Aspekt der Erfindung betrifft ein Verfahren gemäß Anspruch 8 zum Herstellen einer Sonotrode für eine Ultraschallschweißvorrichtung, wie sie vor- und nachstehend beschrieben wird. Das Verfahren umfasst zumindest einen Schritt des Bereitstellens der Sonotrode in einem zu bearbeitenden Zustand und einen Schritt des Bearbeitens der Sonotrode, um die Berührungsfläche der Sonotrode zumindest abschnittsweise aufzurauen.

Ein dritter Aspekt der Erfindung betrifft ein Verfahren gemäß Anspruch 9 zum Herstellen eines Sonotrodenträgers für eine Ultraschallschweißvorrichtung, wie sie vor- und nachstehend beschrieben wird. Das Verfahren umfasst zumindest einen Schritt des Bereitstellens des Sonotrodenträgers in einem zu bearbeitenden Zustand und einen Schritt des Bearbeitens des Sonotrodenträgers, um die Berührungsfläche des Sonotrodenträgers zumindest abschnittsweise aufzurauen.

Es wird darauf hingewiesen, dass Merkmale der Ultraschallschweißvorrichtung auch als Merkmale der vor- und nachstehend beschriebenen Verfahren aufgefasst werden können und umgekehrt.

Wie eingangs erwähnt, ist die Verbindung zwischen der Sonotrode und dem Sonotrodenträger ausschlaggebend für die Qualität des Schweißergebnisses. Wie gut diese Verbindung ist, kann von verschiedenen Einflussfaktoren abhängen, etwa davon, ob das vorgegebene Anzugsmoment der Schraube(n) beachtet wird, wie sauber die Berührungsflächen sind, oder von der fertigungsspezifischen Oberflächenbeschaffenheit der Berührungsflächen.

Der hier vorgestellte Ansatz ermöglicht es nun, die Verbindung zwischen der Sonotrode und dem Sonotrodenträger deutlich unempfindlicher gegenüber Verschmutzungen, etwa durch Öl oder Fett, gegenüber Fehlern bei der Wartung und Montage der Sonotrode und gegenüber Schwankungen bei der Herstellung der betreffenden Komponenten zu machen, und zwar ohne dass unerwünschte Kerben an der Sonotrode und/oder am Sonotrodenträger erzeugt werden. Solche Kerben können - selbst wenn sie relativ klein sind - angesichts der starken Beanspruchung, der die Sonotrode bzw. der Sonotrodenträger im Schweißbetrieb ausgesetzt ist, potenziell zu Beschädigungen führen.

Dies wird prinzipiell dadurch erreicht, dass die Reibung zwischen der Sonotrode und dem Sonotrodenträger durch gezieltes Aufrauen einer oder beider Berührungsflächen, oder zumindest eines Abschnitts davon, in geeigneter Weise erhöht wird. Anders ausgedrückt können durch entsprechendes Aufrauen der Sonotrode und/oder des Sonotrodenträgers in einem geeigneten Bearbeitungsverfahren ein oder mehrere aufgeraute Abschnitte innerhalb einer oder beider Berührungsflächen geschaffen werden, die sich mit dem entsprechenden Gegenpart, beispielsweise einem oder mehreren nicht aufgerauten Abschnitten und/oder einem oder mehreren ebenfalls entsprechend aufgerauten Abschnitten des Gegenparts, im mikroskopischen Maßstab verhaken können. Eine solche Mikroverzahnung gewährleistet im Schweißbetrieb eine sichere Verbindung zwischen der Sonotrode und dem Sonotrodenträger, und zwar ohne dass die Klemmkraft, mit der die Sonotrode und der Sonotrodenträger gegeneinandergedrückt werden, erhöht zu werden braucht.

Dieser vorteilhafte Effekt konnte in Versuchen demonstriert werden, in denen eine Verdrehkraft gemessen wurde, die zum Verdrehen einer Sonotrode in Form eines sogenannten Biegeschwingers (siehe weiter unten) gegenüber dem Sonotrodenträger erforderlich ist.

Für die Versuche wurden folgende Parameter verwendet: Abstand des Kraftangriffspunktes für die Verdrehkraft von der Mitte der Sonotrode: 78 mm; Vorschub: 2 mm/min; Anzugsmoment der Schrauben zur Befestigung der Sonotrode am Sonotrodenträger: 20 Nm. Die Krafteinleitung erfolgte senkrecht zur Längsachse der Sonotrode.

Dabei konnte die Verdrehkraft ausgehend von ca. 550 N für eine Sonotrode mit unbearbeiteter, d. h. nicht speziell aufgerauter Berührungsfläche auf ca. 800 N für eine Sonotrode mit einer durch Laserbearbeitung aufgerauten Berührungsfläche und sogar auf 1150 N für eine Sonotrode mit einer durch Bestrahlung mit Glasperlen aufgerauten Berührungsfläche gesteigert werden. Die Stabilität der Befestigung konnte also bei gleichbleibendem Anzugsmoment mehr als verdoppelt werden. Schwingungstechnisch waren alle getesteten Sonotroden unauffällig.

Die Steigerung der Verdrehkraft lässt sich dadurch erklären, dass durch eine definierte Struktur innerhalb der Berührungsfläche an der Sonotrode und/oder am Sonotrodenträger eine Art Formschluss im mikroskopischen Maßstab, d. h. eine Mikroverzahnung, erzeugt wird. Die Struktur kann so ausgeführt sein, dass sie in den entsprechenden Gegenpart minimal eindringt, d. h., dass sich die Sonotrode und der Sonotrodenträger an der Berührungsfläche nicht punkt- oder linienförmig, sondern flächig berühren. Die für die Mikroverzahnung eingesetzte Struktur und/oder eine mit der Struktur zusammengepresste Oberfläche des Gegenparts können sich dabei geringfügig elastisch und/oder plastisch verformen. Vorstehende Kanten oder Spitzen der durch das Aufrauen erzeugten Struktur können dabei geringfügig in oberflächennahes Material des Gegenparts eindringen und so die Mikroverzahnung bewirken. Die Verformungen können nur wenige Mikrometer groß oder noch kleiner sein, insbesondere deutlich kleiner als die durch das Aufrauen erzeugte Struktur.

Im Folgenden werden einige der vor- und nachstehend verwendeten Begriffe näher erläutert.

Unter einer Berührungsfläche kann einerseits ein makroskopisch ebener Oberflächenabschnitt der Sonotrode verstanden werden, an dem die Sonotrode Kontakt mit der Berührungsfläche des Sonotrodenträgers hat. Andererseits kann darunter ein makroskopisch ebener Oberflächenabschnitt des Sonotrodenträgers verstanden werden, an dem der Sonotrodenträger Kontakt mit der Berührungsfläche der Sonotrode hat. Die beiden Berührungsflächen können durch Befestigen der Sonotrode am Sonotrodenträger miteinander in Deckung gebracht und mit einer definierten Klemmkraft gegeneinandergedrückt werden.

Es ist möglich, dass sich die Sonotrode und der Sonotrodenträger ausschließlich an ihren Berührungsflächen berühren.

Die Berührungsfläche kann abschnittsweise, d. h. in einem oder mehreren zusammenhängenden oder voneinander getrennten Abschnitten, aufgeraut sein. Alternativ kann die gesamte Berührungsfläche aufgeraut sein, d. h., der aufgeraute Abschnitt kann sich über die gesamte Berührungsfläche erstrecken.

Unter einem aufgerauten Abschnitt kann in diesem Zusammenhang ein speziell bearbeiteter, beispielsweise ebener Abschnitt der Berührungsfläche verstanden werden, der durch die spezielle Bearbeitung eine deutlich größere Rauheit als ein nicht derart bearbeiteter Abschnitt der Berührungsfläche oder als eine sonstige Oberfläche der Sonotrode und/oder des Sonotrodenträgers aufweist. Hierzu kann die Berührungsfläche beispielsweise in einem mechanischen, optischen, elektrischen (z. B. Erodieren), elektrochemischen oder chemischen Verfahren zur Oberflächenbehandlung oder in mindestens zwei dieser Verfahren in Kombination bearbeitet worden sein. Anders ausgedrückt kann durch die Bearbeitung eine spezielle reibungserhöhende Struktur im Bereich der Berührungsfläche ausgebildet worden sein, wobei die reibungserhöhenden Eigenschaften der Struktur in allen Richtungen gleich, d. h. ungerichtet oder isotrop, oder in verschiedenen Richtungen verschieden, d. h. gerichtet oder anisotrop, sein können.

Die Rauheit eines derart aufgerauten Abschnitts der Berührungsfläche kann sich von der Rauheit eines nicht derart aufgerauten Abschnitts der Berührungsfläche quantitativ und/oder qualitativ unterscheiden. Der nicht aufgeraute Abschnitt kann im Wesentlichen glatt sein, wobei etwaige mikroskopische Unebenheiten an der Oberfläche dieses Abschnitts durch ein Herstellungs- oder Bearbeitungsverfahren verursacht sein können. Beispielsweise kann der nicht aufgeraute Abschnitt eine Restrauheit aufweisen, die von einer spanenden Herstellung des betreffenden Bauteils und/oder von einem Schleifen, Schmirgeln oder Polieren des betreffenden Bauteils herrührt. Eine derartige Restrauheit ist in der Regel anisotrop, d. h., der betreffende Abschnitt weist in der Regel eine Oberflächenstruktur mit einer Vorzugsrichtung auf, die beispielsweise einer Bearbeitungsrichtung beim Spanen, Schleifen, Schmirgeln oder Polieren entsprechen kann. Die Rauheit des gezielt aufgerauten Abschnitts der Berührungsfläche kann im Vergleich zum nicht aufgerauten Abschnitt deutlich größer sein, beispielsweise um den Faktor 2, 5 oder sogar 10. Außerdem können zum gezielten Aufrauen der Berührungsfläche Techniken eingesetzt werden, die eine isotrope raue Oberflächenstruktur erzeugen, d. h. ohne Vorzugsrichtung, wie beispielsweise Laserbestrahlung, Partikelstrahlen, insbesondere Glaskugelstrahlen oder Sandstrahlen.

Der Sonotrodenträger kann beispielsweise einen Konverter und/oder einen Booster umfassen. Zusätzlich kann der Sonotrodenträger einen Generator umfassen. Die Sonotrode kann an einem freien Ende des (länglichen) Sonotrodenträgers, beispielsweise des Boosters oder des Konverters, befestigt sein, insbesondere derart, dass eine Schwingungsachse, entlang derer der Sonotrodenträger mit Frequenzen im Ultraschallbereich hin- und herbewegbar ist, senkrecht auf den Berührungsflächen steht.

In bestimmten Ausführungen kann der Sonotrodenträger zusätzlich ein Zwischenstück umfassen, das einerseits am Booster oder Konverter befestigt sein kann und an dem andererseits die Sonotrode befestigt sein kann.

Unter einem Konverter kann ein elektromechanisches Bauteil verstanden werden, das ausgebildet ist, um eine durch den Generator bereitgestellte hochfrequente elektrische Spannung in mechanische Ultraschallschwingungen mit einer entsprechenden Frequenz im Ultraschallbereich, beispielsweise zwischen 20 kHz und 100 kHz, vorzugsweise zwischen 20 kHz und 35 kHz, umzuwandeln.

Der Booster, auch Übersetzungs- oder Amplitudentransformationsstück genannt, kann ausgebildet sein, um die vom Konverter bereitgestellten Ultraschallschwingungen in ihrer Amplitude zu ändern, d. h. die Amplitude zu verkleinern und/oder zu vergrößern, und die derart geänderten Ultraschallschwingungen auf die Sonotrode zu übertragen. Zusätzlich kann der Booster ausgebildet sein, um den Sonotrodenträger in der Ultraschallschweißvorrichtung zu lagern.

Unter einer Sonotrode kann ein Werkzeug verstanden werden, das durch Einleiten von Ultraschallschwingungen in entsprechend hochfrequente Resonanzschwingungen versetzbar ist und ausgebildet ist, um diese Schwingungen auf ein oder mehrere zu schweißende Werkstücke zu übertragen. Beispielsweise kann die Sonotrode, insbesondere wenn sie als zweiarmiger Biegeschwinger ausgeführt ist (siehe weiter unten), bezogen auf ihre Längs- und/oder Querachse symmetrisch ausgeformt sein. Somit kann eine ungleichmäßige Beanspruchung der Sonotrode vermieden werden.

Gemäß einer Ausführungsform kann die Sonotrode über mindestens eine Schraube austauschbar am Sonotrodenträger befestigt sein. Dabei kann die Schraube die Berührungsflächen gegeneinanderdrücken. Dies ermöglicht ein kontrolliertes Zusammenpressen der Berührungsflächen. Zudem kann somit der Austausch der Sonotrode vereinfacht werden. Die Sonotrode kann auch über zwei oder mehr als zwei Schrauben austauschbar am Sonotrodenträger befestigt sein.

Gemäß einer Ausführungsform kann die Schraube in eine Sonotrodenöffnung in der Sonotrode eingeführt sein und die Sonotrodenöffnung kann zumindest teilweise von der Berührungsfläche der Sonotrode umgeben sein. Zusätzlich oder alternativ dazu kann die Schraube in eine Sonotrodenträgeröffnung im Sonotrodenträger eingeführt sein und die Sonotrodenträgeröffnung kann zumindest teilweise von der Berührungsfläche des Sonotrodenträgers umgeben sein. Anders ausgedrückt kann die Schraube quer, insbesondere senkrecht, durch eine oder beide Berührungsflächen gehen. Somit kann der Kraftschluss zwischen den beiden Berührungsflächen verbessert werden.

Gemäß einer Ausführungsform kann die Sonotrodenöffnung ringförmig und/oder ringsegmentförmig von der Berührungsfläche der Sonotrode umgeben sein. Zusätzlich oder alternativ dazu kann die Sonotrodenträgeröffhung ringförmig und/oder ringsegmentförmig von der Berührungsfläche des Sonotrodenträgers umgeben sein. Dies kann die Ausrichtung der Sonotrode gegenüber dem Sonotrodenträger vereinfachen, insbesondere falls die Sonotrode über nur eine Schraube am Sonotrodenträger befestigt ist.

Gemäß einer Ausführungsform kann die Sonotrodenöffnung von mindestens einem ringförmigen und/oder ringsegmentförmigen aufgerauten Abschnitt der Berührungsfläche der Sonotrode umgeben sein. Zusätzlich oder alternativ dazu kann die Sonotrodenträgeröffnung von mindestens einem ringförmigen und/oder ringsegmentförmigen aufgerauten Abschnitt der Berührungsfläche des Sonotrodenträgers umgeben sein. Somit kann eine ungewollte Verdrehung der Sonotrode relativ zum Sonotrodenträger im Schweißbetrieb effektiv vermieden werden, insbesondere dann, wenn die Sonotrode über nur eine Schraube am Sonotrodenträger befestigt ist.

Gemäß einer Ausführungsform kann mindestens eine der Berührungsflächen ein Streifenmuster aus mehreren streifenförmigen aufgerauten Abschnitten umfassen. Die streifenförmigen Abschnitte können in der gleichen Richtung oder in verschiedenen Richtungen orientiert sein. Es ist zweckmäßig, wenn die streifenförmigen Abschnitte über die gesamte Berührungsfläche verteilt, insbesondere gleichmäßig verteilt sind. Das Streifenmuster kann beispielsweise durch eine Laserbearbeitung der Sonotrode bzw. des Sonotrodenträgers erzeugt werden. Mit dieser Ausführungsform konnten in Versuchen besonders gute Ergebnisse erzielt werden.

Gemäß einer Ausführungsform können die aufgerauten Abschnitte des Streifenmusters parallel zueinander angeordnet sein. Dabei können die aufgerauten Abschnitte der gleichen Berührungsfläche oder verschiedener Berührungsflächen parallel zueinander angeordnet sein. Zusätzlich kann jeder aufgeraute Abschnitt des Streifenmusters parallel zur Längsrichtung der Sonotrode verlaufen. Auch mit dieser Ausführungsform konnten in Versuchen besonders gute Ergebnisse erzielt werden.

Ein aufgerauter Abschnitt der zumindest abschnittsweise aufgerauten Berührungsfläche weist eine Rauheit auf, die dadurch charakterisiert ist, dass eine gemittelte Rautiefe *R_{z}* des aufgerauten Abschnitts größer als 2,0 µm und/oder ein Mittenrauwert *Rₐ* des aufgerauten Abschnitts größer als 0,3 µm ist. Solche Untergrenzen haben sich in Versuchen als besonders praxistauglich erwiesen.

Die gemittelte Rautiefe *R_{z}* ist kleiner als 14 µm. Zusätzlich oder alternativ dazu ist der Mittenrauwert *Rₐ* kleiner als 3,0 µm. Solche Obergrenzen haben sich in Versuchen als besonders praxistauglich erwiesen.

In Versuchen wurden beispielsweise folgende Rauheitswerte gemessen:
- für einen durch Bestrahlen mit Glasperlen aufgerauten Abschnitt der Berührungsfläche: 0,53 µm für *Rₐ*; 3,29 µm für *R_{z}*;
- für einen durch eine Laserbehandlung aufgerauten Abschnitt der Berührungsfläche: 2,43 µm für *Rₐ*; 13,27 µm für *R_{z}*;
- für einen nicht aufgerauten, d. h. unbehandelten oder lediglich geschliffenen Abschnitt der Berührungsfläche: 0,16 µm für *Rₐ*; 0,90 µm für *R_{z}.*

Die Sonotrode ist als ein Biegeschwinger, der einen Grundkörper und mindestens einen vom Grundkörper abstehenden Biegearm umfasst, ausgeführt. Die Sonotrode kann über den Grundkörper austauschbar am Sonotrodenträger befestigt sein und der Grundkörper kann die Berührungsfläche der Sonotrode umfassen. Dies hat die Wirkung, dass die Sonotrode zu Transversalschwingungen angeregt wird, d. h. im schwingenden Zustand schlangenlinienförmig elastisch verformt wird. Dabei kann die Sonotrode mehrere Stellen aufweisen, auch Nulldurchgänge genannt, an denen ihre Auslenkung bezogen auf eine gedachte Nulllinie null oder vernachlässigbar gering ist. Diese Ausführungsform ermöglicht es, auch schwer zugängliche Werkstücke zu schweißen.

Es ist möglich, dass der Grundkörper den breitesten Teil der Sonotrode darstellt, während der Biegearm zumindest abschnittsweise deutlich schmaler und/oder dünner als der Grundkörper ausgeführt sein kann. Möglich ist auch eine Sonotrode in Form eines stabförmigen Biegeschwingers. Beispielsweise kann sich der Querschnitt des Biegearms mit zunehmendem Abstand vom Grundkörper verjüngen. Somit kann ein freies Ende des Biegearms auch an schwer zugängliche Werkstücke herangefahren werden, ohne dass die Festigkeit des Biegearms maßgeblich beeinträchtigt wird. Damit der Biegearm frei schwingen kann, sollte er den Sonotrodenträger nicht berühren. Anders ausgedrückt ist es möglich, dass die Sonotrode den Sonotrodenträger im schwingenden Zustand, d. h. im Schweißbetrieb, ausschließlich mit ihrem Grundkörper berührt. Im Schweißbetrieb kann der Biegearme mit seinem freien Ende ein zu schweißendes Werkstück berühren.

Beispielsweise kann der Biegeschwinger zwei Biegearme umfassen, die in zueinander entgegengesetzten Richtungen vom Grundkörper abstehen.

Gemäß einer Ausführungsform kann das Bearbeiten der Berührungsfläche der Sonotrode und/oder des Sonotrodenträgers eine Laserbehandlung, eine mechanische Bearbeitung durch Bestrahlen mit einem Strahlmittel oder eine Kombination aus beidem umfassen. Damit kann die Bearbeitung der Sonotrode bzw. des Sonotrodenträgers besonders präzise erfolgen. Durch eine Laserbehandlung kann die betreffende Berührungsfläche beispielsweise an mehreren Stellen mit Laserpulsen punktweise aufgeschmolzen werden. Dabei können sich an den betreffenden Stellen abhängig von den gewählten Laserparametern mikroskopisch kleine Erhebungen bilden, die die Wirkung einer Mikroverzahnung haben können. Beispielsweise kann durch eine Laserbehandlung ein präzises Streifenmuster aus mehreren streifenförmigen aufgerauten Abschnitten erzeugt werden (siehe weiter oben). Denkbar sind aber auch ringförmige und/oder ringsegmentförmige Muster, beispielsweise Muster aus mehreren konzentrischen Ringen und/oder konzentrischen Ringsegmenten. Als Strahlmittel eignen sich beispielsweise Glasperlen oder Sand. Andere Strahlmittel sind ebenfalls möglich.

Es wird darauf hingewiesen, dass mögliche Merkmale und Vorteile von Ausführungsformen der Erfindung vor- und nachstehend teils mit Bezug auf eine Ultraschallschweißvorrichtung, teils mit Bezug auf ein Verfahren zum Herstellen einer entsprechend angepassten Sonotrode der Ultraschallschweißvorrichtung und teils mit Bezug auf ein Verfahren zum Herstellen eines entsprechend angepassten Sonotrodenträgers der Ultraschallschweißvorrichtung beschrieben werden. Ein Fachmann wird erkennen, dass die für einzelne Ausführungsformen beschriebenen Merkmale in analoger und geeigneter Weise auf andere Ausführungsformen übertragen, angepasst und/oder ausgetauscht werden können, um zu weiteren Ausführungsformen der Erfindung und möglicherweise zu Synergieeffekten zu gelangen.

### Kurze Beschreibung der Zeichnungen

Nachfolgend werden vorteilhafte Ausführungsformen der Erfindung unter Bezugnahme auf die beigefügten Zeichnungen weiter erläutert.
Fig. 1 zeigt eine Ultraschallschweißvorrichtung gemäß einer Ausführungsform der Erfindung.
Fig. 2 zeigt einen Sonotrodenträger einer Ultraschallschweißvorrichtung gemäß einer Ausführungsform der Erfindung in der Draufsicht.
Fig. 3 zeigt eine Seitenansicht des Sonotrodenträgers.
Fig. 4 zeigt einen Abschnitt einer einfach verschraubbaren Sonotrode einer Ultraschallschweißvorrichtung gemäß einer Ausführungsform der Erfindung.
Fig. 5 zeigt einen Abschnitt einer zweifach verschraubbaren Sonotrode einer Ultraschallschweißvorrichtung gemäß einer Ausführungsform der Erfindung.
Fig. 6 zeigt einen Abschnitt einer zweifach verschraubbaren Sonotrode einer Ultraschallschweißvorrichtung gemäß einer weiteren Ausführungsform der Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### Beschreibung vorteilhafter Ausführungsformen

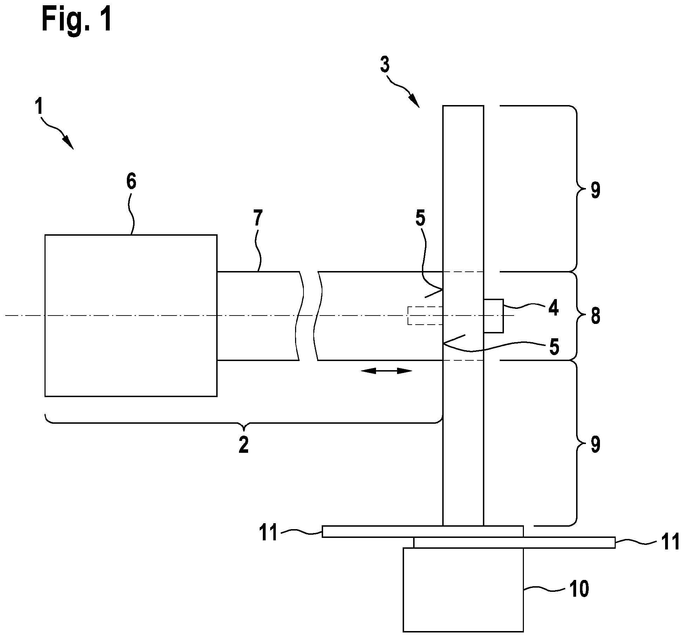

Fig. 1 zeigt eine Ultraschallschweißvorrichtung 1 umfassend einen Sonotrodenträger 2 und eine Sonotrode 3, die mittels des Sonotrodenträgers 2 in Ultraschallschwingungen versetzbar ist (eine Schwingungsrichtung des Sonotrodenträgers 2 ist mit einem Doppelpfeil markiert). Die Sonotrode 3 ist austauschbar am Sonotrodenträger 2 befestigt, hier über eine Schraube 4 an einem freien Ende des Sonotrodenträgers 2. Die Sonotrode 3 und der Sonotrodenträger 2 weisen jeweils eine Berührungsfläche 5 auf, an der sie sich gegenseitig berühren.

Über die Schraube 4 können die beiden Berührungsflächen 5 mit einer definierten Klemmkraft gegeneinandergedrückt werden.

Mindestens eine der beiden Berührungsflächen 5 ist zumindest abschnittsweise aufgeraut. Somit kann der Kraftschluss zwischen den beiden Berührungsflächen 5 verbessert werden.

Der Sonotrodenträger 2 kann einen Konverter 6 zum Umwandeln einer hochfrequenten elektrischen Spannung in mechanische Ultraschallschwingungen und einen Booster 7 zum Übertragen der Ultraschallschwingungen auf die Sonotrode 3 umfassen. Der Booster 7 kann ausgebildet sein, um die Amplitude der Ultraschallschwingungen in geeigneter Weise zu ändern. Die Sonotrode 3 kann dementsprechend an einem freien Ende des Boosters 7 befestigt sein. Möglich ist auch eine Befestigung der Sonotrode 3 am Konverter 6. In diesem Fall kann der Booster 7 entfallen. Zusätzlich kann der Sonotrodenträger 2 einen Generator zum Bereitstellen der elektrischen Spannung umfassen.

In diesem Beispiel ist die Sonotrode 3 als ein Biegeschwinger ausgeführt, der einen Grundkörper 8 und zwei in zueinander entgegengesetzten Richtungen vom Grundkörper 8 abstehende Biegearme 9 umfasst. Möglich ist aber auch eine Sonotrode 3 mit nur einem Biegearm 9. Die Sonotrode 3 ist über den Grundkörper 8 am Sonotrodenträger 2 befestigt und berührt diesen ausschließlich am Grundkörper 8. Die Berührungsfläche 5 der Sonotrode 3 ist somit durch den Grundkörper 8 bereitgestellt.

Zwischen einem freien Ende eines der Biegearme 9 und einem Amboss 10 sind beispielhaft zwei plattenförmige Werkstücke 11 angeordnet, die sich teilweise überlappen. Durch die schwingende Sonotrode 3 können die beiden Werkstücke 11 miteinander verschweißt werden.

Entgegen der in Fig. 1 gezeigten Darstellung kann der Amboss 10 alternativ zumindest teilweise durch mindestens eines der Werkstücke 11 selbst gebildet sein.

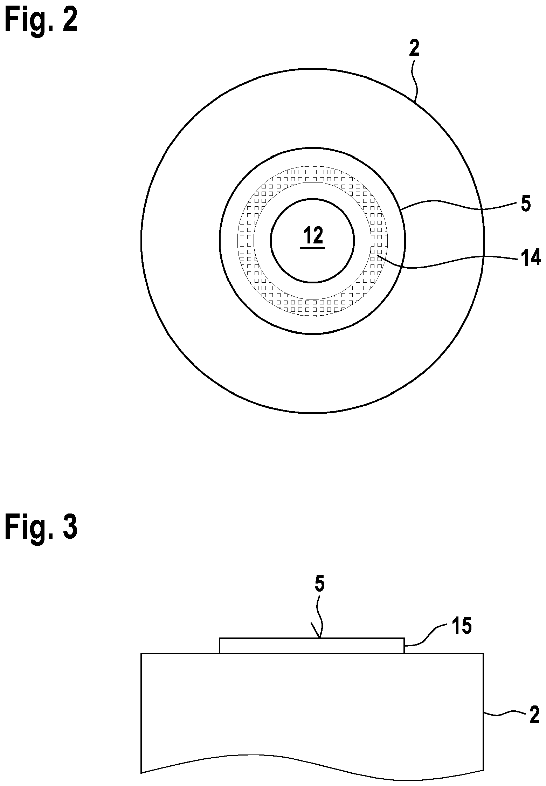

Wie in Fig. 2 zu sehen, ist es möglich, dass die Berührungsfläche 5 des Sonotrodenträgers 2 eine mittige Sonotrodenträgeröffnung 12 aufweist, in die die Schraube 4 einschraubbar ist. Die Berührungsfläche 5 des Sonotrodenträgers 2 kann die Sonotrodenträgeröffnung 12 beispielsweise ringförmig umgeben.

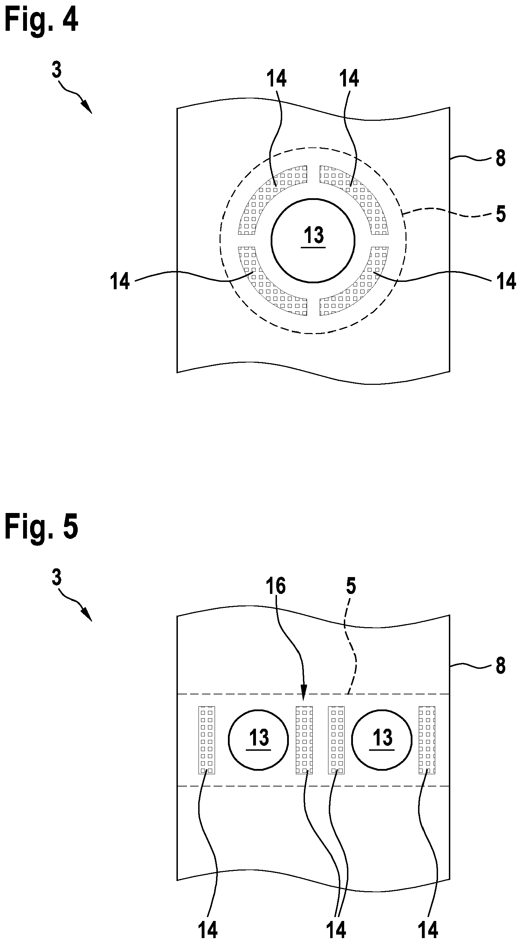

Entsprechend kann die Berührungsfläche 5 der Sonotrode 3 eine Sonotrodenöffnung 13 aufweisen, durch die die Schraube 4 hindurchführbar ist. Die Berührungsfläche 5 der Sonotrode 3 kann die Sonotrodenöffnung 13 ebenfalls ringförmig umgeben (siehe Fig. 4).

Die Berührungsfläche 5 des Sonotrodenträgers 2 kann einen aufgerauten Abschnitt 14 umfassen, dessen Rauheit deutlich größer als in der restlichen Berührungsfläche 5 ist.

Beispielsweise kann der aufgeraute Abschnitt 14 eine gemittelte Rautiefe *R_{z}* zwischen 2,0 µm und 14 µm aufweisen.

Zusätzlich oder alternativ dazu kann der aufgeraute Abschnitt 14 beispielsweise einen Mittenrauwert *Rₐ* zwischen 0,3 µm und 3,0 µm aufweisen.

Der aufgeraute Abschnitt 14 kann die Sonotrodenträgeröffnung 12 ähnlich wie die Berührungsfläche 5 ringförmig umgeben. Möglich ist aber auch eine Anordnung aus einem oder mehreren ringsegmentförmigen aufgerauten Abschnitten 14, wie in Fig. 4 am Beispiel der Sonotrode 3 gezeigt. Eine Anordnung aus mehreren konzentrischen ringförmigen und/oder ringsegmentförmigen aufgerauten Abschnitten 14 ist ebenfalls denkbar.

Der aufgeraute Abschnitt 14 kann oder die aufgerauten Abschnitte 14 können flächenmäßig insgesamt kleiner als die jeweilige Berührungsfläche 5 oder genauso groß wie die jeweilige Berührungsfläche 5 sein, d. h., es kann auch die gesamte Berührungsfläche 5 aufgeraut sein.

Es ist möglich, dass die Berührungsfläche 5 des Sonotrodenträgers 2 durch eine flächige Erhebung 15 an der Stirnseite des Sonotrodenträgers 2 gebildet ist, wie in Fig. 3 gezeigt. Somit kann beispielsweise verhindert werden, dass die Biegearme 9 im schwingenden Zustand vom Sonotrodenträger 2 berührt werden.

Entgegen den in Fig. 4, Fig. 5 und Fig. 6 gezeigten Ausführungsformen kann alternativ oder zusätzlich die Sonotrode 3, beispielsweise deren Grundkörper 8, mit einer solchen flächigen Erhebung ausgeführt sein.

Alternativ oder zusätzlich zum Sonotrodenträger 2 kann die Berührungsfläche 5 der Sonotrode 3 zumindest abschnittsweise in entsprechender Weise aufgeraut sein. Fig. 4 zeigt ein Beispiel einer Sonotrode 3 mit vier ringsegmentförmigen aufgerauten Abschnitten 14 innerhalb der Berührungsfläche 5 der Sonotrode 3.

Möglich ist auch ein Streifenmuster 16 mit mehreren streifenförmigen aufgerauten Abschnitten 14, wie in Fig. 5 zu sehen. Die Abschnitte 14 des Streifenmusters 16 sind hier beispielhaft parallel zueinander ausgerichtet und über die Breite einer rechteckförmigen Berührungsfläche 5 der Sonotrode 3 verteilt angeordnet. Möglich sind aber auch Streifenmuster 16, deren Abschnitte 14 in verschiedenen Richtungen orientiert sind, beispielsweise in zueinander orthogonalen Richtungen.

Darüber hinaus weist die Berührungsfläche 5 in diesem Beispiel zwei Sonotrodenöffnungen 13 zum Aufnehmen je einer Schraube 4 auf (entsprechend kann auch der Sonotrodenträger 2 zwei Sonotrodenträgeröffnungen 12 aufweisen). Dabei kann mindestens einer der Abschnitte 14 des Streifenmusters 16 zwischen den Sonotrodenöffnungen 13 liegen und/oder es kann mindestens eine der Sonotrodenöffnungen 13 zwischen zwei Abschnitten 14 des Streifenmusters 16 liegen.

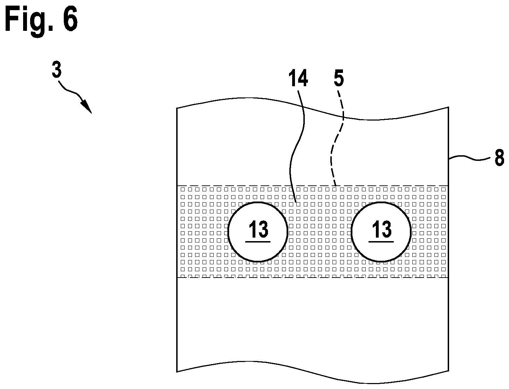

Alternativ kann die gesamte Berührungsfläche 5 der Sonotrode 3 aufgeraut sein (siehe Fig. 6).

Es wird darauf hingewiesen, dass die vorstehend mit Bezug auf die Sonotrode 3 beschriebenen Beispiele für eine aufgeraute Berührungsfläche 5 in entsprechender Weise auf den Sonotrodenträger 2 zutreffen können und umgekehrt.

Bei der Montage kann die Sonotrode 3 mit einem definierten Anzugsmoment am Sonotrodenträger 2 festgeschraubt werden, sodass sich die Berührungsflächen 5 vollständig berühren und im Schweißbetrieb in Berührung bleiben.

Die Berührungsfläche 5 der Sonotrode 3 und/oder des Sonotrodenträgers 2 kann beispielsweise spanabhebend, vorzugsweise durch Schleifen oder Fräsen, hergestellt sein.

Falls die Sonotrode 3, wie es häufig der Fall ist, aus einem härteren Material als der Sonotrodenträger 2 ist, sollte eine reibungserhöhende Struktur, die einen oder mehrere aufgeraute Abschnitte 14 umfasst, an der Sonotrode 3 erzeugt werden. Somit wird das Eindringen der Struktur in den (weicheren) Sonotrodenträger 2 vereinfacht. Denkbar ist aber auch der umgekehrte Fall. Durch Austausch der Sonotrode 3, bei der es sich für gewöhnlich um ein Verschließteil handelt, kann praktischerweise gleichzeitig die Struktur erneuert werden.

Ist der Sonotrodenträger 2 ähnlich hart wie die Sonotrode 3, so kann die Struktur beispielsweise durch eine Laserbehandlung an der Sonotrode 3 erzeugt werden, wodurch die Härte der Sonotrode 3 lokal erhöht wird.

Die Struktur sollte so ausgeführt werden, dass sich ein gleichmäßiges Druckbild an den Berührungsflächen 5 ergibt. Des Weiteren sollte die Struktur so ausgeführt werden, dass die Sonotrode 3 im schwingenden Zustand ausreichend mit der Berührungsfläche 5 des Sonotrodenträgers 2 verbunden bleibt. Eine in diesem Sinn geeignete Struktur kann beispielsweise durch Strahlen, Lasern und/oder Erodieren einer oder beider Berührungsflächen 5 erzeugt werden.

### Liste der Bezugszeichen

- 1: Ultraschallschweißvorrichtung
- 2: Sonotrodenträger
- 3: Sonotrode
- 4: Schraube
- 5: Berührungsfläche
- 6: Konverter
- 7: Booster
- 8: Grundkörper
- 9: Biegearm
- 10: Amboss
- 11: Werkstück
- 12: Sonotrodenträgeröffnung
- 13: Sonotrodenöffnung
- 14: aufgerauter Abschnitt
- 15: flächige Erhebung
- 16: Streifenmuster

## Patentansprüche

1. Ultraschallschweißvorrichtung (1), umfassend:
eine Sonotrode (3); und
einen Sonotrodenträger (2), der ausgebildet ist, um die Sonotrode (3) in Ultraschallschwingungen zu versetzen;
wobei die Sonotrode (3) und der Sonotrodenträger (2) jeweils eine Berührungsfläche (5) aufweisen und mindestens eine der Berührungsflächen (5) zumindest abschnittsweise aufgeraut ist;
wobei ein aufgerauter Abschnitt (14) der zumindest abschnittsweise aufgerauten Berührungsfläche (5) eine gemittelte Rautiefe *R_{z}* von mindestens 2,0 µm und/oder einen Mittenrauwert *Rₐ* von mindestens 0,3 µm aufweist;
wobei die gemittelte Rautiefe *R_{z}* höchstens 14 µm beträgt und/oder wobei der Mittenrauwert *Rₐ* höchstens 3,0 µm beträgt;
wobei die Sonotrode (3) derart austauschbar am Sonotrodenträger (2) befestigt ist, dass die Berührungsflächen (5) gegeneinander gedrückt werden,
wobei die Sonotrode (3) als ein Biegeschwinger, der einen Grundkörper (8) und mindestens einen vom Grundkörper (8) abstehenden Biegearm (9) umfasst, ausgeführt ist;
wobei die Sonotrode (3) über den Grundkörper (8) austauschbar am Sonotrodenträger (2) befestigt ist und der Grundkörper (8) die Berührungsfläche (5) der Sonotrode (3) umfasst.

2. Ultraschallschweißvorrichtung (1) nach Anspruch 1,
wobei die Sonotrode (3) über mindestens eine Schraube (4) austauschbar am Sonotrodenträger (2) befestigt ist.

3. Ultraschallschweißvorrichtung (1) nach Anspruch 2,
wobei die Schraube (4) in eine Sonotrodenöffnung (13) in der Sonotrode (3) eingeführt ist und die Sonotrodenöffnung (13) zumindest teilweise von der Berührungsfläche (5) der Sonotrode (3) umgeben ist; und/oder
wobei die Schraube (4) in eine Sonotrodenträgeröffnung (12) im Sonotrodenträger (2) eingeführt ist und die Sonotrodenträgeröffnung (12) zumindest teilweise von der Berührungsfläche (5) des Sonotrodenträgers (2) umgeben ist.

4. Ultraschallschweißvorrichtung (1) nach Anspruch 3,
wobei die Sonotrodenöffnung (13) ringförmig und/oder ringsegmentförmig von der Berührungsfläche (5) der Sonotrode (3) umgeben ist; und/oder
wobei die Sonotrodenträgeröffnung (12) ringförmig und/oder ringsegmentförmig von der Berührungsfläche (5) des Sonotrodenträgers (2) umgeben ist.

5. Ultraschallschweißvorrichtung (1) nach Anspruch 3 oder 4,
wobei die Sonotrodenöffnung (13) von mindestens einem ringförmigen und/oder ringsegmentförmigen aufgerauten Abschnitt (14) der Berührungsfläche (5) der Sonotrode (3) umgeben ist; und/oder
wobei die Sonotrodenträgeröffnung (12) von mindestens einem ringförmigen und/oder ringsegmentförmigen aufgerauten Abschnitt (14) der Berührungsfläche (5) des Sonotrodenträgers (2) umgeben ist.

6. Ultraschallschweißvorrichtung (1) nach einem der vorhergehenden Ansprüche,
wobei mindestens eine der Berührungsflächen (5) ein Streifenmuster (16) aus mehreren streifenförmigen aufgerauten Abschnitten (14) umfasst.

7. Ultraschallschweißvorrichtung (1) nach Anspruch 6,
wobei die aufgerauten Abschnitte (14) des Streifenmusters (16) parallel zueinander angeordnet sind.

8. Verfahren zum Herstellen einer Sonotrode (3) für eine Ultraschallschweißvorrichtung (1) nach einem der vorhergehenden Ansprüche, wobei das Verfahren umfasst:
Bereitstellen der Sonotrode (3) in einem zu bearbeitenden Zustand, wobei die Sonotrode (3) als ein Biegeschwinger, der einen Grundkörper (8) und mindestens einen vom Grundkörper (8) abstehenden Biegearm (9) umfasst, ausgeführt ist und wobei die Sonotrode (3) über den Grundkörper (8) austauschbar an einem Sonotrodenträger (2) zu befestigen ist und der Grundkörper (8) eine Berührungsfläche (5) der Sonotrode (3) umfasst; und
Bearbeiten der Sonotrode (3), um die Berührungsfläche (5) der Sonotrode (3) zumindest abschnittsweise aufzurauen,
wobei ein aufgerauter Abschnitt (14) der zumindest abschnittsweise aufgerauten Berührungsfläche (5) eine gemittelte Rautiefe *R_{z}* von mindestens 2,0 µm und/oder einen Mittenrauwert *Rₐ* von mindestens 0,3 µm aufweist; und
wobei die gemittelte Rautiefe *R_{z}* höchstens 14 µm beträgt; und/oder wobei der Mittenrauwert *Rₐ* höchstens 3,0 µm beträgt.

9. Verfahren zum Herstellen eines Sonotrodenträgers (2) für eine Ultraschallschweißvorrichtung (1) nach einem der Ansprüche 1 bis 7, wobei das Verfahren umfasst:
Bereitstellen des Sonotrodenträgers (2) in einem zu bearbeitenden Zustand, wobei der Sonotrodenträgers (2) ausgebildet ist, um eine Sonotrode (3) in Ultraschallschwingungen zu versetzen, wobei die Sonotrode (3) als ein Biegeschwinger, der einen Grundkörper (8) und mindestens einen vom Grundkörper (8) abstehenden Biegearm (9) umfasst, ausgeführt ist und wobei die Sonotrode (3) über den Grundkörper (8) austauschbar an dem Sonotrodenträger (2) zu befestigen ist und der Grundkörper (8) eine Berührungsfläche (5) der Sonotrode (3) umfasst; und
Bearbeiten des Sonotrodenträgers (2), um die Berührungsfläche (5) des Sonotrodenträgers (2) zumindest abschnittsweise aufzurauen,
wobei ein aufgerauter Abschnitt (14) der zumindest abschnittsweise aufgerauten Berührungsfläche (5) eine gemittelte Rautiefe *R_{z}* von mindestens 2,0 µm und/oder einen Mittenrauwert *Rₐ* von mindestens 0,3 µm aufweist; und
wobei die gemittelte Rautiefe *R_{z}* höchstens 14 µm beträgt; und/oder wobei der Mittenrauwert *Rₐ* höchstens 3,0 µm beträgt..

10. Verfahren nach Anspruch 8 oder 9,
wobei das Bearbeiten eine Laserbehandlung und/oder eine mechanische Bearbeitung durch Bestrahlen mit einem Strahlmittel umfasst.

## Claims

1. Ultrasound welding device (1), comprising:
a sonotrode (3); and
a sonotrode carrier (2) configured to set the sonotrode (3) in ultrasound oscillations;
wherein the sonotrode (3) and the sonotrode carrier (2) each have a contact face (5) and at least one of the contact faces (5) is roughened at least in portions;
wherein a roughened portion (14) of the contact face (5) roughened at least in portions has an mean roughness depth *R_{z}* of at least 2.0 um and/or an average roughness value *Rₐ* of at least 0.3 um;
wherein the mean roughness depth *R_{z}* is at most 14 um and/or wherein the average roughness value *Rₐ* is at most 3.0 um;
wherein the sonotrode (3) is fixed replaceably on the sonotrode carrier (2) in such a way that the contact faces (5) are pressed against one another,
wherein the sonotrode (3) is configured as a flexural resonator, comprising a base body (8) and at least one bending arm (9) protruding from the base body (8);
wherein the sonotrode (3) is fixed replaceably on the sonotrode carrier (2) via the base body (8), and the base body (8) comprises the contact face (5) of the sonotrode (3) .

2. Ultrasound welding device (1) according to claim 1,
wherein the sonotrode (3) is fixed replaceably on the sonotrode carrier (2) via at least one screw (4).

3. Ultrasound welding device (1) according to claim 2,
wherein the screw (4) is inserted into a sonotrode opening (13) in the sonotrode (3), and the sonotrode opening (13) is enclosed at least in part by the contact face (5) of the sonotrode (3); and/or
wherein the screw (4) is inserted into a sonotrode carrier opening (12) in the sonotrode carrier (2), and the sonotrode carrier opening (12) is enclosed at least in part by the contact face (5) of the sonotrode carrier (2).

4. Ultrasound welding device (1) according to claim 3,
wherein the sonotrode opening (13) is enclosed in a ring shape and/or in a ring segment shape by the contact face (5) of the sonotrode (3); and/or
wherein the sonotrode carrier opening (12) is enclosed in a ring shape and/or in a ring segment shape by the contact face (5) of the sonotrode carrier (2).

5. Ultrasound welding device (1) according to either claim 3 or claim 4,
wherein the sonotrode opening (13) is enclosed by at least one roughened portion (14), in a ring shape and/or in a ring segment shape, of the contact face (5) of the sonotrode (3); and/or
wherein the sonotrode carrier opening (12) is enclosed by at least one roughened portion (14), in a ring shape and/or in a ring segment shape, of the contact face (5) of the sonotrode carrier (2).

6. Ultrasound welding device (1) according to one of the preceding claims,
wherein at least one of the contact faces (5) comprises a strip pattern (16) consisting of a plurality of strip-shaped roughened portions (14).

7. Ultrasound welding device (1) according to claim 6,
wherein the roughened portions (14) of the strip pattern (16) are arranged mutually parallel.

8. Method for producing a sonotrode (3) for an ultrasound welding device (1) according to one of the preceding claims, wherein the method comprises:
providing the sonotrode (3) in a state for machining, the sonotrode (3) being configured as a flexural resonator, comprising a base body (8) and at least one bending arm (9) protruding from the base body (8), and the sonotrode (3) being intended to be fixed replaceably on a sonotrode carrier (2) via the base body (8), and the base body (8) comprising a contact face (5) of the sonotrode (3); and
machining the sonotrode (3) to roughen the contact face (5) of the sonotrode (3) at least in portions,
wherein a roughened portion (14) of the contact face (5) roughened at least in portions has an mean roughness depth *R_{z}* of at least 2.0 um and/or an average roughness value *Rₐ* of at least 0.3 um; and
wherein the mean roughness depth *R_{z}* is at most 14 um and/or wherein the average roughness value *Rₐ* is at most 3.0 um.

9. Method for producing a sonotrode carrier (2) for an ultrasound welding device (1) according to one of claims 1 to 7, wherein the method comprises:
providing the sonotrode carrier (2) in a state for machining, the sonotrode carrier (2) being configured to set a sonotrode (3) in ultrasound oscillations, the sonotrode (3) being configured as a flexural resonator, comprising a base body (8) and at least one bending arm (9) protruding from the base body (8), and the sonotrode (3) being intended to be fixed replaceably on the sonotrode carrier (2) via the base body (8), and the base body (8) comprising a contact face (5) of the sonotrode (3); and
machining the sonotrode carrier (2) to roughen the contact face (5) of the sonotrode carrier (2) at least in portions, wherein a roughened portion (14) of the contact face (5) roughened at least in portions has an mean roughness depth *R_{z}* of at least 2.0 um and/or an average roughness value *Rₐ* of at least 0.3 um; and
wherein the mean roughness depth *R_{z}* is at most 14 um and/or wherein the average roughness value *Rₐ* is at most 3.0 µm.

10. Method according to either claim 8 or claim 9,
wherein the machining comprises laser treatment and/or mechanical machining by jetting using a jetting means.

## Revendications

1. Dispositif de soudage par ultrasons (1), comprenant:
une sonotrode (3) ; et
un support de sonotrode (2) qui est configuré de manière à soumettre la sonotrode (3) à des vibrations ultrasonores ;
dans lequel la sonotrode (3) et le support de sonotrode (2) comportent respectivement une surface de contact (5) et au moins une des surfaces de contact (5) est rendue rugueuse au moins par sections ;
dans lequel une partie rugueuse (14) de la surface de contact (5) rugueuse au moins par sections présente une hauteur de rugosité moyenne R_{z} d'au moins 2,0 µm et/ou une valeur de rugosité moyenne Rₐ d'au moins 0,3 um ;
dans lequel la hauteur de rugosité moyenne R_{z} est d'au plus 14 µm et/ou la valeur de rugosité moyenne Rₐ est d'au plus 3,0 µm ;
dans lequel la sonotrode (3) est fixée sur le support de sonotrode (2) de manière interchangeable de telle sorte que les surfaces de contact (5) sont pressées l'une contre l'autre,
dans lequel la sonotrode (3) est réalisée sous la forme d'un résonateur de flexion qui comprend un corps de base (8) et au moins un bras de flexion (9) faisant saillie à partir du corps de base (8) ;
dans lequel la sonotrode (3) est fixée de manière interchangeable sur le support de sonotrode (2) par l'intermédiaire du corps de base (8) et le corps de base (8) comprend la surface de contact (5) de la sonotrode (3).

2. Dispositif de soudage par ultrasons (1) selon la revendication 1,
dans lequel la sonotrode (3) est fixée sur le support de sonotrode (2) de manière interchangeable par l'intermédiaire d'au moins une vis (4).

3. Dispositif de soudage par ultrasons (1) selon la revendication 2,
dans lequel la vis (4) est introduite dans une ouverture de sonotrode (13) dans la sonotrode (3) et l'ouverture de sonotrode (13) est entourée, au moins partiellement, par la surface de contact (5) de la sonotrode (3) ; et/ou
dans lequel la vis (4) est introduite dans une ouverture de support de sonotrode (12) dans le support de sonotrode (2) et l'ouverture de support de sonotrode (12) est entourée, au partiellement, par la surface de contact (5) du support de sonotrode (2).

4. Dispositif de soudage par ultrasons (1) selon la revendication 3,
dans lequel l'ouverture de sonotrode (13) est entourée par la surface de contact (5) de la sonotrode (3) sous forme d'anneau et/ou sous forme de segment d'anneau ; et/ou
dans lequel l'ouverture de support de sonotrode (12) est entourée par la surface de contact (5) du support de sonotrode (2) sous forme d'anneau et/ou sous forme de segment d'anneau.

5. Dispositif de soudage par ultrasons (1) selon la revendication 3 ou 4,
dans lequel l'ouverture de sonotrode (13) est entourée par au moins une partie rugueuse (14) de la surface de contact (5) de la sonotrode (3) sous forme d'anneau et/ou sous forme de segment d'anneau ; et/ou
dans lequel l'ouverture de support de sonotrode (12) est entourée par au moins une partie rugueuse (14) de la surface de contact (5) du support de sonotrode (2) sous forme d'anneau et/ou sous forme de segment d'anneau.

6. Dispositif de soudage par ultrasons (1) selon l'une des revendications précédentes,
dans lequel au moins une des surfaces de contact (5) comprend un motif à bandes (16) constitué de plusieurs parties rugueuses (14) en forme de bandes.

7. Dispositif de soudage par ultrasons (1) selon la revendication 6,
dans lequel les parties rugueuses (14) du motif à bandes (16) sont disposées parallèlement les unes aux autres.

8. Procédé de fabrication d'une sonotrode (3) pour un dispositif de soudage par ultrasons (1) selon l'une des revendications précédentes, le procédé comprenant:
fournir la sonotrode (3) dans un état à usiner, dans lequel la sonotrode (3) est réalisée sous la forme d'un résonateur de flexion qui comprend un corps de base (8) et au moins un bras de flexion (9) faisant saillie à partir du corps de base (8), et dans lequel la sonotrode (3) doit être fixée de manière interchangeable sur un support de sonotrode (3) par l'intermédiaire du corps de base (8) et le corps de base (8) comprend une surface de contact (5) de la sonotrode (3) ; et
usiner la sonotrode (3) de manière à rendre rugueuse la surface de contact (5) de la sonotrode (3) au moins par sections,
dans lequel une partie rugueuse (14) de la surface de contact (5) rendue rugueuse au moins par sections présente une hauteur de rugosité moyenne R_{z} d'au moins 2,0 µm et/ou une valeur de rugosité moyenne Rₐ d'au moins 0,3 um ; et
dans lequel la hauteur de rugosité moyenne R_{z} est d'au plus 14 µm et/ou la valeur de rugosité moyenne Rₐ est d'au plus 3,0 µm.

9. Procédé de fabrication d'un support de sonotrode (2) pour un dispositif de soudage par ultrasons (1) selon l'une des revendications 1 à 7, le procédé comprenant:
fournir le support de sonotrode (2) dans un état à usiner, dans lequel le support de sonotrode (2) est configuré de manière à soumettre une sonotrode (3) à des vibrations ultrasonores, dans lequel la sonotrode (3) est réalisée sous la forme d'un résonateur de flexion qui comprend un corps de base (8) et au moins un bras de flexion (9) faisant saillie à partir du corps de base (8), et dans lequel la sonotrode (3) doit être fixée de manière interchangeable sur le support de sonotrode (2) par l'intermédiaire du corps de base (8) et le corps de base (8) comprend une surface de contact (5) de la sonotrode (3) ; et
usiner le support de sonotrode (2) afin de rendre rugueuse la surface de contact (5) du support de sonotrode (2) au moins par sections,
dans lequel une partie rugueuse (14) de la surface de contact (5) rendue rugueuse au moins par sections présente une hauteur de rugosité moyenne R_{z} d'au moins 2,0 µm et/ou une valeur de rugosité moyenne Rₐ d'au moins 0,3 um ; et
dans lequel la hauteur de rugosité moyenne R_{z} est d'au plus 14 µm et/ou la valeur de rugosité moyenne Rₐ est d'au plus 3,0 µm.

10. Procédé selon la revendication 8 ou 9,
dans lequel l'usinage comprend un traitement au laser et/ou un usinage mécanique par projection d'un agent de sablage.
